(19) Europäisches Patentamt / European Patent Office / Office européen des brevets

(11) **EP 3 607 280 B1**

(12) **FASCICULE DE BREVET EUROPEEN**

(45) Date de publication et mention
de la délivrance du brevet:
**20.12.2023 Bulletin 2023/51**

(21) Numéro de dépôt: **18722656.8**

(22) Date de dépôt: **29.03.2018**

(51) Classification Internationale des Brevets (IPC):
**G01F 13/00** (2006.01) **G01F 15/00** (2006.01)
**F17C 5/06** (2006.01) **G01F 1/84** (2006.01)
**G01F 15/02** (2006.01)

(52) Classification Coopérative des Brevets (CPC):
**G01F 13/006; F17C 5/06; G01F 1/8436;**
**G01F 15/002; G01F 15/02;** F17C 2203/0673;
F17C 2221/012; F17C 2225/0123; F17C 2225/035;
F17C 2225/036; F17C 2227/04; F17C 2227/044;
F17C 2250/043; F17C 2250/0443;
F17C 2250/0636; (Cont.)

(86) Numéro de dépôt international:
**PCT/FR2018/050767**

(87) Numéro de publication internationale:
**WO 2018/185401 (11.10.2018 Gazette 2018/41)**

(54) **PROCÉDÉ POUR MESURER LA QUANTITÉ DE GAZ INTRODUITE DANS UN RÉSERVOIR ET STATION CORRESPONDANTE**

VERFAHREN ZUR MESSUNG DER IN EINEN BEHÄLTER EINGEFÜHRTEN GASMENGE UND ENTSPRECHENDE FÜLLSTATION

METHOD FOR MEASURING THE QUANTITY OF GAS INTRODUCED INTO A RESERVOIR AND CORRESPONDING FILLING STATION

(84) Etats contractants désignés:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priorité: **07.04.2017 FR 1753046**

(43) Date de publication de la demande:
**12.02.2020 Bulletin 2020/07**

(73) Titulaire: **L'AIR LIQUIDE, Société Anonyme pour l'Etude**
**et l'Exploitation des Procédés Georges Claude**
**75007 Paris (FR)**

(72) Inventeur: **FRANCOIS, Thibaut**
**38120 Fontanil Cornillon (FR)**

(74) Mandataire: **Air Liquide**
**L'Air Liquide S.A.**
**Direction de la Propriété Intellectuelle**
**75, Quai d'Orsay**
**75321 Paris Cedex 07 (FR)**

(56) Documents cités:
**EP-A1- 0 074 164 JP-A- 2006 300 156**
**JP-A- 2006 300 156 JP-A- 2007 024 152**
**JP-A- 2007 024 152 JP-A- 2014 043 882**
**JP-A- 2014 043 882**

**(Cont. page suivante)**

(52) Classification Coopérative des Brevets (CPC): (Cont.)
F17C 2260/024; F17C 2260/026; F17C 2265/065; F17C 2270/0168; Y02E 60/32

**Description**

L'invention concerne un procédé pour mesurer la quantité de gaz introduite de réservoir ainsi qu'une station de remplissage.

L'invention concerne plus particulièrement un procédé pour mesurer la quantité de gaz introduite dans un réservoir de gaz via une station de remplissage munie d'un conduite de remplissage comprenant une extrémité amont reliée à au moins une source de gaz sous pression et une extrémité aval raccordée à un réservoir à remplir, la conduite de remplissage comprenant un débitmètre et au moins une vanne d'isolation aval disposée entre le débitmètre et l'extrémité aval de la conduite de remplissage, le procédé comprenant une étape de transfert de gaz depuis la source vers le réservoir durant laquelle la vanne d'isolation aval est ouverte, une étape d'interruption du transfert de gaz avec une fermeture de vanne aval, le procédé comprenant une étape de mesure, par le débitmètre, de la quantité de gaz transférée au cours de l'étape de transfert.

Un tel procédé est connu notamment des documents EP0074164 A1, JP2014043882 A, JP2006300156 A, et JP2007024152 A.

Les stations de remplissage de réservoirs de gaz sous pression, notamment les réservoirs de gaz carburant de véhicules, nécessitent de mesurer la quantité de gaz introduit dans le réservoir avec un niveau de précision relativement élevé. Ceci s'applique en particulier au remplissage de réservoirs d'hydrogène gazeux sous pression.

Cette quantité doit être mesurée en vue de sa facturation (de la même façon qu'un carburant liquide).

Dans le cas d'un gaz, par exemple l'hydrogène, de nombreux paramètres ont de l'influence sur la mesure de cette quantité (pression, température, volume, débit...).

Cette quantité dépend en particulier des conditions initiales (pression dans le réservoir avant remplissage notamment) et finales (pression après remplissage notamment). Cette quantité est également difficile à mesurer car généralement une quantité de gaz présente dans le circuit est purgée à l'extérieur après le remplissage. Cette purge est prévue pour abaisser la pression dans le flexible de la conduite de remplissage pour permettre à l'utilisateur de déconnecter l'extrémité de la conduite de remplissage du réservoir.

Idéalement il faudrait mesurer le débit de gaz transférer au plus près du réservoir (au niveau de la buise de remplissage). Cependant, pour des raisons industrielles et techniques, cette mesure de débit est en fait réalisée plus en amont. Ainsi, une partie du gaz mesurée par de débitmètre n'est pas transférée dans le réservoir et risque d'être facturée au client.

Pour mesurer au plus juste la quantité de gaz transférée (et donc la quantité facturée) il est connu de ne pas compter le gaz qui est utilisé le cas échéant lors de test avant le remplissage (des impulsions de gaz peuvent en effet être prévues pour des tests d'étanchéité et/ou pour calculer le volume du réservoir ou d'autres paramètres).

Un but de l'invention est de proposer un procédé et/ou un dispositif permettant une amélioration de la précision de la mesure de cette quantité de gaz réellement fournie au réservoir.

Un but de la présente invention est de pallier tout ou partie des inconvénients de l'art antérieur relevés ci-dessus.

A cette fin, l'invention introduit un procédé défini par la revendication 1.

Par ailleurs, des modes de réalisation de l'invention peuvent comporter l'une ou plusieurs des caractéristiques suivantes :

- la génération d'un signal de quantité de gaz transféré corrigée est obtenue en soustrayant ou en ajoutant une quantité déterminée d'impulsions aux impulsions générées par le débitmètre,
- l'étape de modification est réalisée en modifiant (en augmentant ou en réduisant) la fréquence des impulsions générées par le débitmètre, c'est-à-dire en retirant ou en ajoutant une durée déterminée à l'intervalle de temps séparant des impulsions successives générées par le débitmètre,
- la quantité déterminée corrective de gaz est une proportion déterminée de la quantité de gaz mesurée par le débitmètre au cours de l'étape de transfert,
- la proportion déterminée est fixe c'est-à-dire indépendante des conditions opératoires de l'étape de remplissage ou variable c'est-à-dire dépendante des conditions opératoires de l'étape de remplissage,
- la conduite de remplissage comprend, en aval de la vanne d'isolation aval, une vanne de purge commandée, le procédé comprend une étape de purge à l'extérieur de la conduite de remplissage d'au moins une partie du gaz sous pression emprisonné dans la partie aval de conduite de remplissage après l'étape de transfert,
- la quantité déterminée corrective de gaz est un pourcentage déterminé de la quantité de gaz évacuée lors de l'étape de purge,
- le pourcentage qui varie en fonction des conditions opératoires de l'étape de remplissage et notamment en fonction de la pression mesurée dans la ligne de transfert au cours de l'étape de transfert, ledit pourcentage étant calculé de façon régulière au cours de l'étape de remplissage et notamment à la fin de l'étape de transfert,
- le pourcentage est proportionnel à la pression dans la ligne de transfert,
- le pourcentage est compris entre 100% et 0% et de préférence entre 95% et 75%,
- la conduite de remplissage comprend un débitmètre de purge configuré pour mesurer la quantité de gaz évacuée lors de l'étape de purge,
- l'étape de modification est réalisée pendant l'étape de transfert,

- l'étape de modification est réalisée en fin ou après la fin de l'étape de transfert,
- la station de remplissage comprend un dispositif électronique de traitement et de stockage de données, comprenant notamment un microprocesseur et/ou un ordinateur, ledit dispositif électronique étant configuré pour recevoir un signal représentatif de la quantité de gaz transféré mesurée par le débitmètre au cours de l'étape de transfert et pour calculer et/ou recevoir et/ou transmettre et/ou afficher le signal de quantité de gaz transféré corrigée,
- les conditions opératoires de l'étape de remplissage comprennent au moins l'une au moins parmi : la durée de l'étape de transfert, la pression mesurée ou estimée dans la conduite de remplissage avant l'étape de transfert, la pression mesurée ou estimée dans la conduite de remplissage pendant l'étape de transfert, la pression mesurée ou estimée dans la conduite de remplissage à la fin de l'étape de transfert, la pression mesurée ou estimée dans le réservoir de remplissage avant l'étape de transfert, la pression mesurée ou estimée dans le réservoir de remplissage pendant l'étape de transfert, la pression mesurée ou estimée dans le réservoir de remplissage à la fin de l'étape de transfert, la température du gaz dans la conduite de transfert, la température du gaz dans le réservoir, le volume de la conduite de transfert en aval de la vanne d'isolation aval, la quantité mesurée ou estimée de gaz mis à l'air lors d'une phase de purge de la conduite de transfert après l'étape de transfert,
- dans le cas où la quantité de gaz transféré corrigée consiste à réduire d'une quantité déterminée corrective la quantité de gaz transféré mesurée par le débitmètre au cours de l'étape de transfert, cette réduction est réalisée en supprimant et/ou en ne comptabilisant pas certaines impulsions déterminées parmi les impulsions générées par le débitmètre,
- la quantité corrective est fonction de l'un au moins des paramètres suivants: la pression mesurée ou estimée dans la conduite de remplissage avant l'étape de transfert, la pression mesurée ou estimée dans la conduite de remplissage pendant l'étape de transfert, la pression mesurée ou estimée dans la conduite de remplissage à la fin de l'étape de transfert, la pression mesurée ou estimée dans le réservoir de remplissage avant l'étape de transfert, la pression mesurée ou estimée dans le réservoir de remplissage pendant l'étape de transfert, la pression mesurée ou estimée dans le réservoir de remplissage à la fin de l'étape de transfert, la température du gaz dans la conduite de transfert, la température du gaz dans le réservoir, le volume de la conduite de transfert en aval de la vanne d'isolation aval, la quantité mesurée ou estimée de gaz mis à l'air lors d'une phase de purge de la conduite de transfert après l'étape de transfert

- la proportion est fonction de la pression finale dans le réservoir (2) ou dans la ligne de transfert,
- la pression dans le réservoir ou dans la conduite de remplissage pendant ou à la fin de l'étape de transfert est mesurée ou estimée, la quantité déterminée corrective étant une quantité qui varie en fonction (de préférence uniquement) de cette pression,
- la quantité déterminée corrective de gaz est retirée à la quantité de gaz transféré mesurée et est comprise entre 11 et 5 grammes lorsque la pression dans le réservoir à remplir ou dans la conduite de remplissage est comprise entre 850 et 700 bar et comprise entre 8 et 2,5 grammes lorsque la pression dans le réservoir à remplir ou dans la conduite de remplissage est comprise entre 700 et 400bar_et comprise entre 6 et 1 gramme lorsque la pression dans le réservoir à remplir ou dans la conduite de remplissage est comprise entre 400 et 200bar,
- la quantité déterminée corrective de gaz est une quantité qui varie en fonction de la température du gaz dans le réservoir à remplir ou dans la conduite de remplissage,
- le pourcentage (%) déterminé de la quantité de gaz évacuée lors de l'étape de purge définissant la quantité corrective est donné par la formule

$$\% = (P-P_i)/(P_m-P_i)$$

dans laquelle P est la pression dans la conduite de remplissage pendant ou à la fin de l'étape de transfert, Pi est la pression finale dans la ligne de transfert après l'étape d'évacuation, Pm étant une valeur déterminée de référence tel que la pression maximale de service dans la ligne de transfert, Pm étant comprise entre 500 et 1 000bar et de préférence entre 700 et 900bar, par exemple égal à 875bar, les valeurs de pression étant exprimées par exemple en bar ou Pa,

- la quantité déterminée corrective de gaz est calculée par une équation d'état du gaz et notamment l'équation des gaz parfaits ou réels appliquée au gaz dans la partie aval de la conduite de remplissage avant l'étape de purge et après l'étape de purge à partir des paramètres suivants : le volume connu de la conduite de remplissage en aval de la vanne d'isolation aval, la pression finale mesurée dans le réservoir à remplir ou dans la conduite de remplissage pendant ou à la fin de l'étape de transfert et avant l'étape de purge, la température mesurée ou estimée du gaz dans le réservoir à remplir ou dans la conduite de remplissage, la nature connue du gaz et notamment sa masse molaire, la pression dans la conduite de remplissage après l'étape de purge, la quantité corrective étant le résultat de la différence entre la quantité de gaz présent dans la dans la partie aval de la conduite de remplissage avant l'étape de purge et la quantité de gaz présent dans la dans la partie aval de la conduite de remplissage après l'étape de purge,

- la quantité déterminée corrective de gaz est une quantité fixe.

L'invention concerne également une station de remplissage de réservoirs de fluide sous pression, notamment pour le remplissage de réservoirs d'hydrogène sous pression, définie à la revendication 15.

L'invention peut concerner également tout dispositif ou procédé alternatif comprenant toute combinaison des caractéristiques ci-dessus ou ci-dessous.

En particulier le dispositif électronique peut être configuré pour réaliser tout ou partie des actions ci-dessus ou ci-dessous.

D'autres particularités et avantages apparaîtront à la lecture de la description ci-après, faite en référence aux figures dans lesquelles :

- la figure 1 représente une vue schématique et partielle illustrant un exemple de structure et de fonctionnement d'une station de remplissage selon un premier mode de réalisation possible de l'invention,
- la figure 2 représente une vue schématique et partielle illustrant un exemple de structure et de fonctionnement d'une station de remplissage selon un second mode de réalisation possible de l'invention.

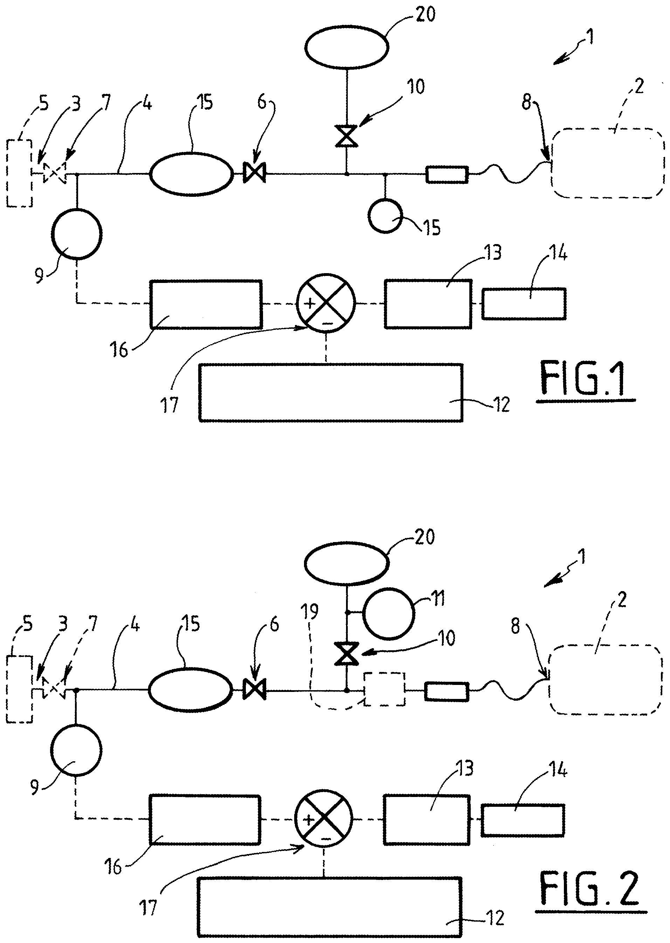

La station de remplissage de réservoirs de fluide sous pression schématisée à la figure 1 comprend classiquement une conduite 4 de remplissage comprenant au moins une extrémité 3 amont reliée à au moins une source 5 de gaz sous pression et au moins une extrémité 8 aval destinée à raccordée à un réservoir 2 à remplir.

La source de gaz (hydrogène notamment) peut comprendre au moins l'un parmi : un ou plusieurs réservoirs de gaz sous pression, notamment plusieurs réservoirs raccordés en parallèle pour un remplissage en cascade, un compresseur, une source de gaz liquéfié et un vaporiseur, et/ou tout autre source de gaz sous pression appropriée.

L'extrémité aval 8 comprend par exemple au moins un tuyau flexible dont l'extrémité terminale comprend un raccord, de préférence un raccord rapide, permettant sa liaison étanche avec l'entrée d'un réservoir 2 ou d'un circuit de remplissage d'un réservoir 2 (notamment de véhicule).

La conduite 4 de remplissage comprenant un débitmètre 9 et au moins une vanne 6 d'isolation aval disposée entre le débitmètre 9 et l'extrémité aval 8 de la conduite 4 de remplissage. La vanne 6 d'isolation est de préférence une vanne 6 pilotée pour permettre une étape de transfert de gaz depuis la source 5 vers le réservoir 2 lorsqu'elle est ouverte.

Le débitmètre 9, de préférence du type à effet Coriolis est configuré pour mesurer la quantité de gaz transférée et générer un signal (électrique de préférence) correspondant.

La station 1 comprend un dispositif 12 électronique de traitement et de stockage de données, comprenant par exemple un microprocesseur et/ou un ordinateur. Ce dispositif 12 électronique est configuré recevoir le signal du débitmètre 9 et pour générer un signal de quantité de gaz transféré corrigée obtenu en réduisant ou en augmentant d'une quantité déterminée corrective la quantité de gaz transféré mesurée par le débitmètre 9 au cours du transfert.

De préférence, le dispositif 12 électronique peut être configuré pour commander tout ou partie des vannes 6, 10 ou organes de la station et/ou pour recevoir des mesures de pression 15 et/ou de température réalisé par un ou des capteurs dans le circuit 4 de remplissage (en amont et/ou en aval de la vanne 6 d'isolation aval. En particulier, préférence le dispositif 12 électronique peut être configuré pour commander le transfert de gaz vers le réservoir 2 (contrôle du débit et/ou des sources...) selon un débit prédéterminé (rampe de pression fixe et/ou variable).

De plus, le dispositif 12 électronique peut comprendre ou être associé à une interface homme machine comprenant par exemple un afficheur 13 et/ou un terminal 14 de paiement et/ou un organe de saisie et/ou d'identification. Le dispositif 12 électronique peut comprendre des organes de communication sans fil pour transmettre ou recevoir ces données et/ou d'autres données. En particulier, tout ou partie des moyens de calcul et/ou de stockage de données et/ou d'affichage et/ou de facturation peuvent être déportés de la station ou dupliqués à distance (via le réseau internet ou un réseau local et utilisant par exemple des applications sur téléphone sans fil).

Comme illustré, la conduite 4 de remplissage comprend également de préférence en outre une vanne 10 de purge située en aval de la vanne 6 d'isolation aval.

La vanne 10 de purge est de préférence commandé pour évacuer à l'extérieur de la conduite 4 de remplissage au moins une partie du gaz sous pression emprisonné dans la partie aval de conduite 4 de remplissage après une étape de transfert (à la fin d'un remplissage). Le gaz purgé est évacué à l'atmosphère ou dans une zone 20 de récupération.

En réduisant ou en augmentant d'une quantité déterminée corrective la quantité de gaz transféré mesurée par le débitmètre 9 au cours de l'étape de transfert il est ainsi possible d'afficher et/ou de facturer à l'utilisateur une quantité de gaz qui est plus proche ou égale à la quantité de gaz réellement transférée dans le réservoir 2.

Le débitmètre 5 est du type générant des signaux électriques sous forme d'impulsions successives (« pulses ») correspondant chacune à une quantité élémentaire de gaz mesurée (par exemple un gramme ou trois gramme ou « x » gramme à chaque impulsion). C'est-à-dire que, à chaque fois que le débitmètre mesure le passage d'une quantité de gaz (par exemple un gramme) il émet une impulsion. Le débit correspond au nombre d'impulsions par unité de temps (par exemple un certain nombre de grammes de gaz par minutes).

La génération d'un signal de quantité de gaz transféré corrigée est obtenue par une étape de modification d'au moins l'un parmi : la valeur de la quantité élémentaire de gaz correspondant à une impulsion générée par le débitmètre 5 et/ou le nombre des impulsions générées par le débitmètre 5 et/ou la fréquence d'émission des impulsions générées par le débitmètre 5 et/ou le nombre des impulsions comptabilisées parmi les impulsions générées par le débitmètre 5.

La génération d'un signal de quantité de gaz transféré corrigée peut notamment être obtenue en soustrayant ou en ajoutant une quantité déterminée d'impulsions aux impulsions générées par le débitmètre. La soustraction de pulse peut être obtenue par exemple en ne tenant pas compte (en ne comptabilisant pas) certaines impulsions.

Par exemple, la quantité déterminée corrective de gaz est une proportion déterminée de la quantité de gaz mesurée par le débitmètre 5 au cours de l'étape de transfert

Par exemple, seulement un pourcentage d'impulsions est soustrait ou non comptabilisé ou ajouté aux impulsions générées par le débitmètre 9. Ce pourcentage (ou quantité corrective) est de préférence fonction de la pression dans la conduite 4 de remplissage au cours et/ou à la fin de l'étape de transfert de gaz.

La quantité de gaz purgé après remplissage (après une étape de transfert de gaz) dépend essentiellement de la pression finale dans la conduite 4 de soutirage. Cette pression finale dépend de la pression maximale de service du réservoir (par exemple 200bar ou 300bar ou 700bar ou 875bar ou une valeur intermédiaire ou supérieure).

Selon un mode de réalisation avantageuse, la quantité déterminée corrective de gaz est un pourcentage déterminé de la quantité de gaz évacuée lors de l'étape de purge. Ce pourcentage peut être fixé arbitrairement ou calculé selon les conditions opératoires du remplissage.

La quantité corrective est par exemple fonction (proportionnelle notamment) de la pression courante et/ou finale dans la ligne 4 de transfert au cours du transfert de gaz.

Par exemple, on peut définir une relation proportionnelle entre :

- la pression P courante (mesurée régulièrement) dans la ligne 4 de transfert pendant l'étape de transfert,
- le nombre Nf total d'impulsions générées par le débitmètre 9 à l'instant considéré de l'étape de transfert,
- le pourcentage (%) d'impulsion non comptabilisées/supprimées/ajoutées,
- le nombre corrigé Ncorrect d'impulsions (après calcul de la quantité de gaz transférée corrigée),

- la quantité Ni d'impulsions correspondant à la quantité de gaz purgé lors d'une étape de purge consécutive à une étape de transfert.

Cette quantité Ni d'impulsions correspondant à la quantité de gaz purgé lors d'une étape de purge peut être calculée ou mesurée ou prédéfinie de façon arbitraire. Cette quantité Ni d'impulsions correspondant à la quantité de gaz purgé lors d'une étape de purge dépend par exemple :

- du volume (connu) de la conduite 4 de remplissage purgé,
- de la pression Pm finale maximale permise dans la conduite 4 de remplissage (ou d'une pression maximale de référence déterminée), par exemple comprise entre 500 et 1000bar et de préférence entre 700 et 900bar, par exemple égal à 875bar,
- la pression Pi finale dans la conduite 4 de remplissage après l'étape d'évacuation (purge), cette pression étant mesurée ou estimée, et, éventuellement prédéfinie, par exemple à quelques bar, notamment 3bar,
- la température mesurée ou estimée du gaz dans la conduite 4 de remplissage.

Par exemple, le pourcentage (%) d'impulsion non comptabilisées/supprimées peut être donné par la formule suivante :

%= (P-Pi)/(Pm-Pi) dans laquelle P est la pression courante dans la conduite 4 de remplissage pendant l'étape de transfert, Pi est la pression finale dans la ligne de transfert après l'étape d'évacuation/purge, Pm étant la valeur déterminée de référence tel que la pression maximale de service dans la ligne 4 de transfert, par exemple égale à 875bar.

Ainsi, en déterminant ce pourcentage % (de façon fixe au préalable ou en temps réel), il est possible de définir le nombre corrigé Ncorrect d'impulsions comme la différence entre le nombre Nf total d'impulsions générées par le débitmètre 9 et le produit du pourcentage avec la quantité Ni d'impulsions correspondant à la quantité de gaz purgé :

$$Ncorrect=Nf-\%.Ni$$

Dans un exemple de mise en oeuvre possible, en début de remplissage les conditions peuvent être les suivantes : P=0bar, Pi=3bar, Pm=875bar donc %=2pourcent, Nf est par exemple égale à cent impulsions (on prédéfinit la quantité de gaz totale à transférée comme étant égale à 100 impulsions mesurées), et Ni égale à trois impulsions.

En cours de remplissage, les conditions peuvent être les suivantes : P=400bar, Pi=3bar, Pm=875bar donc %=46 pourcent, Nf = cent impulsions, et Ni égale à trois impulsions. Alors Ncorrect = entre 98 et 99 impulsions. C'est-à-dire que la correction a consisté à retirer une à deux impulsions.

Plus tard en cours de remplissage, les conditions peuvent être les suivantes : P=750bar, Pi=3bar, Pm=875bar donc %=86 pourcent, Nf = cent impulsions, et Ni égale à trois impulsions. Alors Ncorrect = environ 97 impulsions. C'est-à-dire que la correction a consisté à retirer trois impulsions.

Bien entendu, le pourcentage n'est pas limité à l'expression ci-dessus est pourrait être une valeur déterminée prédéfinie en fonction de la pression P dans la conduite 4 de remplissage en début ou en fin de remplissage ou d'une valeur de référence indépendante de la pression dans la conduite 4 de remplissage.

De même, le pourcentage pourrait être une valeur déterminée prédéfinie en fonction du différentiel de pression (P0-Pi) entre la pression P0 dans la ligne 4 de transfert avant l'étape de transfert et la pression (Pi) dans la ligne de transfert mesurée au cours de l'étape de transfert et/ou à la fin de l'étape de transfert.

La quantité Ni d'impulsions correspondant à la quantité de gaz purgé lors d'une étape de purge peut être prédéterminée et quantifiées par des mesures selon les conditions opératoires ou par calcul (équation d'état du gaz, équation thermodynamiques).

Ainsi, en connaissant Nf, % et Ni, la station peut ajuster en continu pendant le transfert de gaz (et/ou à la fin du transfert de gaz) la quantité de gaz transféré corrigée qui sera réellement facturée/prise en compte.

L'avantage de réaliser cet ajustement en continu pendant l'étape de transfert (et non pas à la fin de l'étape de transfert) est de disposer d'une mesure précise (affichage) en temps réel qui permet le cas échéant de délivrer une information qui ne subit pas de variation lors de l'arrêt du remplissage.

En particulier, si l'utilisateur souhaite arrêt le transfert de gaz à un certain niveau affiché de pression ou de quantité de gaz ou de facturation, l'ajustement continu ne modifiera pas la quantité de gaz affichée/facturée en fin de remplissage.

Au contraire, en cas d'ajustement en fin de transfert de gaz, la quantité gaz affichée en temps réelle peut subir une variation après l'arrêt. Ceci peut le cas échéant surprendre un utilisateur qui justement souhaite arrêter un transfert de gaz en fonction d'une valeur précise atteinte de quantité de gaz facturée.

Cet ajustement peut être réalisé en continu à chaque intervalle de temps de temps prédéfini (seconde), et/ou à chaque intervalle de pression dans le réservoir prédéfini (bar) et/ou à chaque quantité prédéfinie d'impulsions ou e temps réel.

Par exemple, l'ajustement peut consister à retirer dix pourcent de gaz à la quantité de gaz mesurée par le débitmètre 9. Si le débitmètre 9 génère une impulsion à chaque dix gramme mesurés et qu'un kilogramme de gaz est transféré, le signal généré par le débitmètre contiendra cent impulsions (10gx100=1000g). Dans ce cas, l'ajustement de 10% consiste à retirer (ne pas compter) dix impulsions. Ces dix impulsions peuvent être retirées à la fin (les dix dernières) ou régulièrement, une toutes les dix impulsions générées au cours de l'étape de transfert.

Les quatre-vingt dix impulsions restantes (10gx90=900grammes) constituent la quantité de gaz transféré corrigée et réellement transférée ou facturée.

Ainsi, la quantité corrective de gaz peut être connue à chaque niveau de pression lors du remplissage. Pour chaque gramme de gaz mesuré par le débitmètre 9 un pourcentage faible (deux à quinze pourcent par exemple) peut être considéré non introduit dans le réservoir 2 et purgé.

Au lieu de retirer (ne pas comptabiliser)/ajouter des impulsions à celles mesurées par le débitmètre 9 il est également possible de jouer sur un autre paramètre tel que la modulation de phase ou de fréquence des impulsions. Ainsi l'intervalle de temps entre les impulsions peut servir de variable d'ajustement pour arriver à la quantité de gaz corrigée.

Ainsi, il est possible de « reconstruire/modifier » la fréquence des impulsions générée par le débitmètre 9 pour tenir compte de cette correction.

Par exemple, si cent impulsions sont générées pendant une durée D par le débitmètre 9, celles-ci sont retraitées (traitement du signal) en quatre-vingt-dix impulsions régulièrement répartie pendant la même durée D.

Le temps ajouté ou retranché entre deux impulsions peut être déterminé pour correspondre à la quantité de gaz corrigée.

C'est-à-dire que les Ncorrect impulsions sont « reréparties » régulièrement pendant la durée de remplissage prédéfinie.

La durée D de remplissage peut être définie/estimée au préalable (avant remplissage) en fonction de la pression initiale dans le réservoir 2, de la vitesse d'augmentation de pression prévue (rampe de pression prédéfinie) et de la pression finale souhaitée.

Par exemple pour un réservoir de 122litres, et une rampe de pression de 218 bar/minute, et une pression cible de 819 bar, la durée D du remplissage est de 3 minutes te 15 secondes (quantité injectée est 4,2kg et la température de remplissage est de -33°C). Ces conditions de remplissage sont définies le cas échéant par des conditions normées.

Le lien entre la durée ajoutée ou retirée entre les impulsions mesurées par le débitmètre 9 peut être basé sur :

- la durée estimée ou calculée du remplissage qui peut être découpée en intervalles (delta t) déterminés,
- le volume de la conduite de remplissage 4 déterminé destiné à être purgé, ce volume associé à la pression avant la purge permet de définir la quantité Ni d'impulsions correspondant à la quantité de gaz purgé,
- il est alors possible de faire correspondre la quantité de gaz à purger et la durée équivalente des impulsions Ni correspondantes.

En effet, la variation de pression multipliée par la durée définit la pression atteinte. La pression étant connue elle permet de déterminer la densité du gaz via une équation d'état (température mesurée ou supposée connue). La densité multipliée par le volume à purger définit la quantité (masse) de gaz à purger et donc Ni.

Cette durée peut être divisée par la durée D estimée du remplissage et répartie pour chacun des intervalles de temps (delta t) calculés. Ainsi on ajoute (ou retire) un temps (t1) à chaque intervalle (delta t). La fréquence des impulsions générées est donc modifiée pour tenir compte en continu la quantité de gaz corrective à ajouter/retirer.

Ainsi, par exemple pour une même durée de remplissage D et n impulsions mesurées par le débitmètre 9 séparées par un intervalle de temps (delta t) entre deux impulsions (n entier>0) peuvent être modifiées en m impulsions (m entier>0 et m <n) séparées par un intervalle de temps augmenté (delta t + t1) entre deux impulsions.

Dans le cas où une quantité corrective de gaz doit être ajoutée il pourrait y avoir, après ajustement, q impulsions (q entier >0 et q>n) séparées par un intervalle de temps réduit (delta t - t1) entre deux impulsions.

Pour simplifier le processus, tout ou partie des paramètres (durée) de remplissage D, quantité de gaz transférée, température ambiante, température du gaz dans la conduite 4 de remplissage, pression avant l'étape de transfert dans la conduite 4 de remplissage, température finale dans la conduite 4 de remplissage à la fin de l'étape de transfert...) peuvent être fixées au préalable selon des condition réputées standard.

La quantité de gaz transférée corrigées serait alors calculée sur ces conditions fixes. Ceci permet notamment de limiter le nombre de paramètres à mesurer et donc le nombre d'appareils dont le fonctionnement doit être certifié.

De même, dans un autre mode de réalisation possible, la valeur de la quantité unitaire des impulsions peut servir de variable d'ajustement pour arriver à la quantité de gaz corrigée.

Par exemple, les impulsions ne sont plus générées à chaque gramme mais à chaque 1,1 gramme de gaz mesuré.

De préférence, dans ce cas la valeur connue du volume du réservoir 2 à remplir est utilisée.

La précision de correction peut être adaptée à un type de réservoir 2 (volume en particulier).

Cette ajustement est adaptée également lorsque la station 1 est modifiée (volume de la conduite 4 de remplissage notamment).

Ainsi, la quantité de gaz corrective peut être définie ou prédéfinie pour chaque augmentation de pression dans le réservoir 2 rempli (et si besoin en fonction d'autres paramètres tels que la température du gaz).

Selon une autre possibilité, la quantité déterminée corrective de gaz peut être une quantité fixe (par exemple une masse de gaz déterminée) quelles que soient les conditions de remplissage. Par exemple, la quantité déterminée corrective est comprise entre dix et deux grammes et de préférence entre neuf et six grammes.

Par exemple, la quantité corrective sera indépendante de la pression finale à la fin de l'étape de transfert de gaz. Cette quantité sera préétablie pour des conditions de pression maximales de remplissage (200 bar, 350 bar ou 700 bar par exemple). Dans ce cas, il n'est pas nécessaire de prévoir un capteur 15 de pression dans la boucle de mesure et de calcul ou pas nécessaire d'utiliser sa mesure dans le calcul de la quantité corrective.

En variante ou en combinaison, cette quantité corrective est une quantité fixe ou un pourcentage (fixe ou variable) qui est fonction (qui varie) selon les conditions de remplissage et par exemple la pression finale.

Ainsi, dans le cas où différents réservoirs 2 sont remplis à des pressions différentes, les quantités déterminées correctives pourront être différentes.

La quantité déterminée corrective peut correspondre à une valeur prédéterminée correspondant à des conditions thermodynamiques déterminées : volume, température une pression et/ou densité.

La quantité déterminée corrective de gaz peut éventuellement varier également en fonction de la température du gaz dans le réservoir 2 à remplir ou dans la conduite 4 de remplissage.

La quantité déterminée corrective de gaz peut éventuellement varier en fonction du volume du réservoir 2 (connu ou mesuré) et/ou du volume connu ou mesuré du circuit 4 de remplissage.

La quantité déterminée corrective de gaz peut être la quantité de gaz calculée ou mesurée évacuée via la vanne 10 de purge ou une fraction de celle-ci.

Par exemple la quantité de gaz purgée peut être estimée à partir du volume connu dans le circuit 4 entre la vanne 6 d'isolation aval et l'extrémité 8 aval, de la pression 15 mesurée dans cette partie de circuit 4, de la température mesurée ou estimée dans cette partie de circuit 4, des caractéristiques du gaz (sa nature, sa masse molaire...), et de la pression finale dans la conduite 4 après l'étape de transfert et après l'étape de purge. Sur la base de ces paramètres la densité et/ou la masse de gaz purgée peut être calculée.

Par exemple, la quantité déterminée corrective de gaz est calculée par une équation d'état (équation des gaz parfaits ou réels) appliquée au gaz dans la partie aval de la conduite de remplissage avant l'étape de purge et après l'étape de purge à partir des paramètres suivants : le volume connu de la conduite de remplissage en aval de la vanne 6 d'isolation aval, la pression finale mesurée dans le réservoir 2 à remplir ou dans la conduite 4 de remplissage à la fin de l'étape de transfert avant l'étape de purge, la température mesurée ou estimée du gaz dans le réservoir 2 à remplir ou dans la conduite 4 de remplissage, la nature connue du gaz et notamment sa masse molaire, la pression dans la conduite 4 de remplissage après l'étape de purge. La quantité corrective peut être le résultat de la différence entre la quantité calculée de gaz présent dans la partie aval de la conduite 4 de remplissage avant l'étape de purge et la quantité calculée de gaz présent dans la partie aval de la conduite 4 de remplissage après l'étape de purge.

Comme illustré à la figure 2, la station peut comprendre un second débitmètre 11 de purge situé en aval de la vanne 10 de purge configuré pour mesurer la quantité de gaz purgé lors de l'étape de purge. La quantité déterminée corrective de gaz est par exemple la quantité de gaz mesurée par le débitmètre 11 de purge ou une fraction déterminée de celle-ci.

Comme schématisé aux figures, le dispositif 12 électronique de traitement et de stockage de données peut comprendre ou être associé un organe 16 de comptage des impulsions et un organe 17 de correction des impulsions comptabilisées (ce ou ces organes 16, 17 peuvent comprendre des cartes électroniques ou tout autre dispositif approprié).

Bien entendu le circuit 4 de remplissage peut comporter d'autre(s) éléments et notamment vanne(s) 7 en amont ou en aval de la vanne 6 d'isolation aval et/ou un volume tampon entre le débitmètre 9 et la vanne 6 d'isolation aval, un échangeur 19 de refroidissement du gaz en aval de la vanne 6 d'isolation aval.

## Revendications

1. Procédé pour mesurer la quantité de gaz introduite dans un réservoir (2) de gaz via une station (1) de remplissage munie d'un conduite (4) de remplissage comprenant une extrémité (3) amont reliée à au moins une source (5) de gaz sous pression et une extrémité (8) aval raccordée à un réservoir (2) à remplir, la conduite (4) de remplissage comprenant un débitmètre (9) et au moins une vanne (6) d'isolation aval disposée entre le débitmètre et l'extrémité aval (8) de la conduite de remplissage, le procédé comprenant une étape de transfert de gaz depuis la source (5) vers le réservoir (2) durant laquelle la vanne (6) d'isolation aval est ouverte, une étape d'interruption du transfert de gaz avec une fermeture de vanne (6) aval, le procédé comprenant une étape de mesure, par le débitmètre (5), de la quantité de gaz transférée au cours de l'étape de transfert, le procédé comprenant une étape de génération d'un signal de quantité de gaz transféré corrigée, la quantité de gaz transféré corrigée étant obtenue, au cours de l'étape de transfert, en réduisant ou en augmentant d'une quantité déterminée corrective la quantité de gaz transféré mesurée par le débitmètre (5) au cours de l'étape de transfert, le débitmètre étant du type générant des signaux électriques sous forme d'impulsions successives correspondant chacune à une quantité élémentaire de gaz mesurée, la génération d'un signal de quantité de gaz transféré corrigée étant obtenue par une étape de modification d'au moins l'un parmi : la valeur de la quantité élémentaire de gaz correspondant à une impulsion générée par le débitmètre (5) et/ou le nombre des impulsions générées par le débitmètre (5) et/ou la fréquence d'émission des impulsions générées par le débitmètre (5) et/ou le nombre des impulsions comptabilisées parmi les impulsions générées par le débitmètre (5), **caractérisé en ce que** l'étape de modification est réalisée de façon régulièrement répartie temporellement pendant l'étape de transfert pour permettre d'afficher et/ou facturer une quantité de gaz qui est plus proche ou égale à la quantité de gaz réellement transférée dans le réservoir (2).

2. Procédé selon la revendication 1, **caractérisé en ce que** la génération d'un signal de quantité de gaz transféré corrigée est obtenue en soustrayant ou en ajoutant une quantité déterminée d'impulsions aux impulsions générées par le débitmètre (5).

3. Procédé selon l'une quelconque des revendications 1 ou 2, **caractérisé en ce que** l'étape de modification est réalisée en modifiant (en augmentant ou en réduisant) la fréquence des impulsions générées par le débitmètre (5), c'est-à-dire en retirant ou en ajoutant une durée déterminée à l'intervalle de temps séparant des impulsions successives générées par le débitmètre (5).

4. Procédé selon l'une quelconque des revendications 1 à 3, **caractérisé en ce que** la quantité déterminée corrective de gaz est une proportion déterminée de la quantité de gaz mesurée par le débitmètre (5) au cours de l'étape de transfert.

5. Procédé selon la revendication 4, **caractérisé en ce que** la proportion déterminée est fixe c'est-à-dire indépendante des conditions opératoires de l'étape de remplissage ou variable c'est-à-dire dépendante des conditions opératoires de l'étape de remplissage.

6. Procédé selon l'une quelconque des revendications 1 à 5, **caractérisé en ce que** la conduite (4) de remplissage comprend, en aval de la vanne (6) d'isolation aval, une vanne (10) de purge commandée, le procédé comprend une étape de purge à l'extérieur de la conduite (4) de remplissage d'au moins une partie du gaz sous pression emprisonné dans la partie aval de conduite (4) de remplissage après l'étape de transfert.

7. Procédé selon la revendication 6 combinée à l'une quelconque des revendications 1 à 5, **caractérisé en ce que** la quantité déterminée corrective de gaz est un pourcentage déterminé de la quantité de gaz évacuée lors de l'étape de purge.

8. Procédé selon la revendication 7, **caractérisé en ce que** le pourcentage varie en fonction des conditions opératoires de l'étape de remplissage et notamment en fonction de la pression mesurée (15) dans la ligne (4) de transfert au cours de l'étape de transfert, ledit pourcentage étant calculé de façon régulière au cours de l'étape de remplissage et notamment à la fin de l'étape de transfert.

9. Procédé selon la revendication 8, **caractérisé en ce que** le pourcentage est proportionnel à la pression dans la ligne (4) de transfert.

10. Procédé selon l'une des revendications 8 ou 9, **caractérisé en ce que** le pourcentage est proportionnel à la différence (P-Pi) entre d'une part la pression (P) dans la ligne (4) de transfert mesurée (15) au cours de l'étape de transfert ou à la fin de l'étape de transfert et, d'autre part, la pression (Pi) dans la ligne de transfert après l'étape de purge.

11. Procédé selon l'une quelconque des revendications 7 à 10, **caractérisé en ce que** le pourcentage est compris entre 100% et 0% et de préférence entre 95% et 75%.

12. Procédé selon l'une quelconque des revendications 6 à 11, **caractérisé en ce que** la conduite (4) de remplissage comprend un débitmètre (11) de purge configuré pour mesurer la quantité de gaz évacuée lors de l'étape de purge.

13. Procédé selon l'une quelconque des revendications 1 à 12, **caractérisé en ce que** la station (1) de remplissage comprend un dispositif (12) électronique de traitement et de stockage de données, comprenant notamment un microprocesseur et/ou un ordinateur, ledit dispositif (12) électronique étant configuré pour recevoir un signal représentatif de la quantité de gaz transféré mesurée par le débitmètre (5) au cours de l'étape de transfert et pour calculer et/ou recevoir et/ou transmettre et/ou afficher le signal de quantité de gaz transféré corrigée.

14. Procédé selon l'une quelconque des revendications 1 à 13, **caractérisé en ce que** le signal de quantité de gaz transféré corrigée est utilisé dans une étape de calcul d'une facturation de la quantité de gaz introduite dans le réservoir (2).

15. Station de remplissage de réservoirs de fluide sous pression, notamment pour le remplissage de réservoirs d'hydrogène sous pression, comportant une conduite (4) de remplissage comprenant une extrémité (3) amont reliée à au moins une source (5) de gaz sous pression et au moins une extrémité (8) aval destinée à être raccordée à un réservoir (2) à remplir, la conduite (4) de remplissage comprenant un débitmètre (9) et au moins une vanne (6) d'isolation aval disposée entre le débitmètre et l'extrémité aval (8) de la conduite de remplissage, la au moins une vanne (6) étant pilotée pour permettre une étape de transfert de gaz depuis la source (5) vers le réservoir (2), le débitmètre (5) étant configuré pour mesurer la quantité de gaz transféré et générer en réponse un signal correspondant, la station (1) comprenant un dispositif (12) électronique de traitement et de stockage de données, comprenant notamment un microprocesseur et/ou un ordinateur, le dispositif (12) électronique étant configuré pour recevoir le signal du débitmètre et pour générer un signal de quantité de gaz transféré corrigée obtenu, au cours du transfert, en réduisant ou en augmentant d'une quantité déterminée corrective la quantité de gaz transféré mesurée par le débitmètre (5) au cours du transfert, le débitmètre étant du type générant des signaux électriques sous forme d'impulsions successives correspondant chacune à une quantité élémentaire de gaz mesurée, la génération d'un signal de quantité de gaz transféré corrigée étant obtenue par une étape de modification d'au moins l'un parmi : la valeur de la quantité élémentaire de gaz correspondant à une impulsion générée par le débitmètre (5) et/ou le nombre des impulsions générées par le débitmètre (5) et/ou la fréquence d'émission des impulsions générées par le débitmètre (5) et/ou le nombre des impulsions comptabilisées parmi les impulsions générées par le débitmètre (5), **caractérisé en ce que** l'étape de modification est réalisée de façon régulièrement répartie temporellement pendant l'étape de transfert pour permettre d'afficher et/ou facturer une quantité de gaz qui est plus proche ou égale à la quantité de gaz réellement transférée dans le réservoir (2).

**Patentansprüche**

1. Verfahren zum Messen der Gasmenge, die in einen Gasbehälter (2) über eine Füllstation (1) eingeführt wird, die mit einer Füllleitung (4) versehen ist, die ein stromaufwärtiges Ende (3), das mit mindestens einer Quelle (5) für Gas unter Druck verbunden ist, und ein stromabwärtiges Ende (8), das an einen zu befüllenden Behälter (2) angeschlossen ist, umfasst, wobei die Füllleitung (4) einen Durchflussmesser (9) und mindestens ein stromabwärtiges Absperrventil (6), das zwischen dem Durchflussmesser und dem stromabwärtigen Ende (8) der Füllleitung angeordnet ist, umfasst, wobei das Verfahren einen Schritt des Transferierens von Gas von der Quelle (5) zu dem Behälter (2) umfasst, während dessen das stromabwärtige Absperrventil (6) geöffnet ist, einen Schritt des Unterbrechens des Transferierens von Gas mit einem Schließen des stromabwärtigen Ventils (6), wobei das Verfahren einen Schritt des Messens, durch den Durchflussmesser (5), der während des Transferschritts transferierten Gasmenge umfasst, wobei das Verfahren einen Schritt des Erzeugens eines Signals für die korrigierte Menge transferierten Gases umfasst, wobei die korrigierte Menge transferierten Gases während des Transferschritts erhalten wird, indem die von dem Durchflussmesser (5) während des Transferschritts gemessene Menge transferierten Gases um eine bestimmte korrigierende Menge vermindert oder erhöht wird, wobei der Durchflussmesser von dem Typ ist, der elektrische Signale in Form von aufeinander folgenden Impulsen erzeugt, von denen jeder einer gemessenen elementaren Gasmenge entspricht, wobei das Erzeugen eines Signals für eine korrigierte Menge transferierten Gases erhalten wird durch einen Schritt des Änderns von mindestens einem unter: dem Wert der elementaren Gasmenge, die einem von dem Durchflussmesser (5) erzeugten Impuls entspricht, und/oder der Anzahl der von dem Durchflussmesser (5) erzeugten Impulse und/oder der Sendehäufigkeit der von dem Durchflussmesser (5) erzeugten Impulse und/oder der Anzahl der erfassten Impulse unter den von dem Durchflussmesser (5) erzeugten Impulsen, **dadurch gekennzeichnet, dass** der Änderungsschritt während des Transferschritts zeitlich regelmäßig verteilt ausgeführt wird, um zu ermöglichen, eine Gasmenge anzuzeigen und/oder zu fakturieren, die der tatsächlich in den Behälter (2) transferierten Gasmenge möglichst nah kommt oder gleich dazu ist.

2. Verfahren nach Anspruch 1, **dadurch gekennzeichnet, dass** das Erzeugen eines Signals für die korrigierte Menge transferierten Gases erhalten wird, indem eine bestimmte Impulsmenge von den von dem Durchflussmesser (5) erzeugten Impulsen subtrahiert oder dazu addiert wird.

3. Verfahren nach einem der Ansprüche 1 oder 2, **dadurch gekennzeichnet, dass** der Änderungsschritt ausgeführt wird, indem die Häufigkeit der von dem Durchflussmesser (5) erzeugten Impulse geändert (erhöht oder vermindert) wird, das heißt, indem eine bestimmte Dauer von dem Zeitintervall, das die von dem Durchflussmesser (5) erzeugten aufeinander folgenden Impulse trennt, abgezogen wird oder dazu addiert wird.

4. Verfahren nach einem der Ansprüche 1 bis 3, **dadurch gekennzeichnet, dass** die bestimmte korrigierende Gasmenge ein bestimmter Anteil der von dem Durchflussmesser (5) während des Transferschritts gemessenen Gasmenge ist.

5. Verfahren nach Anspruch 4, **dadurch gekennzeichnet, dass** der bestimmte Anteil fix ist, das heißt unabhängig von den Betriebsbedingungen des Füllschritts ist, oder variabel ist, das heißt von den Betriebsbedingungen des Füllschritts abhängig ist.

6. Verfahren nach einem der Ansprüche 1 bis 5, **dadurch gekennzeichnet, dass** die Füllleitung (4) stromab des stromabwärtigen Absperrventils ein gesteuertes Entlüftungsventil (10) umfasst, wobei das Verfahren einen Schritt des Entlüftens mindestens eines Teils des in dem stromabwärtigen Teil der Füllleitung (4) nach dem Transferschritt eingeschlossenen Gases unter Druck nach außerhalb der Füllleitung (4) umfasst.

7. Verfahren nach Anspruch 6 in Kombination mit einem der Ansprüche 1 bis 5, **dadurch gekennzeichnet, dass** die bestimmte korrigierende Gasmenge ein bestimmter Prozentsatz der beim Entlüftungsschritt abgeführten Gasmenge ist.

8. Verfahren nach Anspruch 7, **dadurch gekennzeichnet, dass** der Prozentsatz in Abhängigkeit von den Betriebsbedingungen des Füllschritts und insbesondere in Abhängigkeit von dem in der Transferleitung (4) während des Transferschritts gemessenen Druck (15) variiert, wobei der Prozentsatz regelmäßig während des Füllschritts und insbesondere am Ende des Transferschritts berechnet wird.

9. Verfahren nach Anspruch 8, **dadurch gekennzeichnet, dass** der Prozentsatz proportional zu dem Druck in der Transferleitung (4) ist.

10. Verfahren nach einem der Ansprüche 8 oder 9, **dadurch gekennzeichnet, dass** der Prozentsatz proportional zu der Differenz (P-Pi) zwischen dem Druck (P) in der Transferleitung (4), der während des Transferschritts oder am Ende des Transferschritts gemessen (15) wird, zum einen und dem Druck (Pi) in der Transferleitung nach dem Entlüftungsschritt zum anderen ist.

11. Verfahren nach einem der Ansprüche 7 bis 10, **dadurch gekennzeichnet, dass** der Prozentsatz zwischen 100 % und 0 %, bevorzugt zwischen 95 % und 75 % beträgt.

12. Verfahren nach einem der Ansprüche 6 bis 11, **dadurch gekennzeichnet, dass** die Füllleitung (4) einen Entlüftungsdurchflussmesser (11) umfasst, der dazu ausgestaltet ist, die beim Entlüftungsschritt abgeführte Gasmenge zu messen.

13. Verfahren nach einem der vorhergehenden Ansprüche 1 bis 12, **dadurch gekennzeichnet, dass** die Füllstation (1) eine elektronische Vorrichtung (12) zur Verarbeitung und Speicherung von Daten umfasst, die insbesondere einen Mikroprozessor und/oder einen Computer umfasst, wobei die elektronische Vorrichtung (12) dazu ausgestaltet ist, ein Signal zu empfangen, das für die von dem Durchflussmesser (5) während des Transferschritts gemessene Menge transferierten Gases repräsentativ ist, und das Signal für die korrigierte Menge transferierten Gases zu berechnen und/oder zu empfangen und/oder zu übertragen und/oder anzuzeigen.

14. Verfahren nach einem der Ansprüche 1 bis 13, **dadurch gekennzeichnet, dass** das Signal für die korrigierte Menge transferierten Gases in einem Schritt zum Berechnen einer Fakturierung der in den Behälter (2) eingeführten Gasmenge verwendet wird.

15. Station zum Füllen von Behältern mit Fluid unter Druck, insbesondere zum Füllen von Behältern mit Wasserstoff unter Druck, die eine Füllleitung (4) aufweist, die ein stromaufwärtiges Ende (3), das mit mindestens einer Quelle (5) für Gas unter Druck verbunden ist, und mindestens ein stromabwärtiges Ende (8), das dazu bestimmt ist, an einen zu befüllenden Behälter (2) angeschlossen zu werden, umfasst, wobei die Füllleitung (4) einen Durchflussmesser (9) und mindestens ein stromabwärtiges Absperrventil (6), das zwischen dem Durchflussmesser und dem stromabwärtigen Ende (8) der Fülleitung angeordnet ist, umfasst, wobei das mindestens eine Ventil (6) angesteuert wird, um einen Schritt des Transferierens von Gas von der Quelle (5) zu dem Behälter (2) zu ermöglichen, wobei der Durchflussmesser (5) dazu ausgestaltet ist, die Menge transferierten Gases zu messen und als Antwort ein entsprechendes Signal zu erzeugen, wobei die Station (1) eine elektronische Vorrichtung (12) zur Verarbeitung und Speicherung von Daten umfasst, die insbesondere einen Mikroprozessor und/oder einen Computer umfasst, wobei die elektronische Vorrichtung (12) dazu ausgestaltet ist, das Signal des Durchflussmessers zu empfangen und ein Signal für die korrigierte Menge transferierten Gases zu erzeugen, das während des Transfers erhalten wird, indem die von dem Durchflussmesser (5) während des Transfers gemessene Menge transferierten Gases um eine bestimmte korrigierende Menge vermindert oder erhöht wird, wobei der Durchflussmesser von dem Typ ist, der elektrische Signale in Form von aufeinander folgenden Impulsen erzeugt, die jeweils einer gemessenen elementaren Gasmenge entsprechen, wobei das Erzeugen eines Signals für die korrigierte Menge transferierten Gases durch eine Schritt des Änderns erhalten wird von mindestens einem unter: dem Wert der elementaren Gasmenge, die einem von dem Durchflussmesser (5) erzeugten Impuls entspricht, und/oder der Anzahl der von dem Durchflussmesser (5) erzeugten Impulse und/oder der Sendehäufigkeit der von dem Durchflussmesser (5) erzeugten Impulse und/oder der Anzahl der erfassten Impulse unter den von dem Durchflussmesser (5) erzeugten Impulsen, **dadurch gekennzeichnet, dass** der Änderungsschritt während des Transferschritts zeitlich regelmäßig verteilt ausgeführt wird, um zu ermöglichen, eine Gasmenge anzuzeigen und/oder zu fakturieren, die der tatsächlich in den Behälter (2) transferierten Gasmenge möglichst nah kommt oder gleich dazu ist.

## Claims

1. Method for measuring the quantity of gas introduced into a gas tank (2) via a filling station (1) equipped with a filling pipe (4) comprising an upstream end (3) connected to at least one source (5) of pressurized gas and a downstream end (8) connected to a tank (2) that is to be filled, the filling pipe (4) comprising a flow meter (9) and at least one downstream isolation valve (6) positioned between the flow meter and the downstream end (8) of the filling pipe, the method comprising a step of transferring gas from the source (5) to the tank (2) during which step the downstream isolation valve (6) is open, a step of interrupting the transfer of gas with closure of the downstream valve (6), the method comprising a step of measuring, using the flow meter (5), the quantity of gas transferred during the transfer step, the method comprising a step of generating a signal indicating the corrected quantity of gas transferred, the corrected quantity of gas transferred being obtained, during the transfer step, by reducing or by increasing, by a determined corrective quantity, the quantity of gas transferred as measured by the flow meter (5) during the transfer step, the flow meter being of the type that generates electric signals in the form of successive pulses each corresponding to an elementary measured quantity of gas, the generation of a signal indicating the corrected quantity of gas transferred being obtained by a step of modifying at least one of the following: the value of the elementary quantity of gas corresponding to a pulse generated by the flow meter (5) and/or the number of pulses generated by the flow meter (5) and/or the frequency with which the pulses generated by the flow meter (5) are emitted and/or the number of pulses counted from the pulses generated by the flow meter (5), **characterized in that** the modification step is performed in a way that is temporally uniformly distributed through the transfer step so as to make it possible to display and/or to charge for a quantity of gas which is closer or equal to the quantity of gas actually transferred into the tank (2).

2. Method according to Claim 1, **characterized in that** the generation of a signal indicative of the corrected quantity of gas transferred is obtained by subtracting, or by adding, a determined quantity of pulses from or to the pulses generated by the flow meter (5).

3. Method according to either one of Claims 1 and 2, **characterized in that** the modification step is performed by modifying (up or down) the frequency of the pulses generated by the flow meter (5), namely by removing or by adding a determined length of time from or to the time interval separating successive pulses generated by the flow meter (5).

4. Method according to any one of Claims 1 to 3, **characterized in that** the determined corrective quantity of gas is a determined proportion of the quantity of gas measured by the flow meter (5) during the transfer step.

5. Method according to Claim 4, **characterized in that** the determined proportion is fixed, which is to say independent of the operating conditions of the filling step, or variable, which is to say dependent on the operating conditions of the filling step.

6. Method according to any one of Claims 1 to 5, **characterized in that** the filling pipe (4) comprises, downstream of the downstream isolation valve (6), a controlled purge valve (10), the method comprises a step of purging to outside the filling pipe (4) at least some of the pressurized gas trapped in the downstream part of the filling pipe (4) after the transfer step.

7. Method according to Claim 6 combined with any one of Claims 1 to 5, **characterized in that** the determined corrective quantity of gas is a determined percentage of the quantity of gas discharged during the purge step.

8. Method according to Claim 7, **characterized in that** the percentage varies according to the operating conditions of the filling step and notably according to the pressure measured (15) in the transfer line (4) during the transfer step, said percentage being calculated regularly during the filling step and notably at the end of the transfer step.

9. Method according to Claim 8, **characterized in that** the percentage is proportional to the pressure in the transfer line (4).

10. Method according to one of Claims 8 and 9, **characterized in that** the percentage is proportional to the difference (P-Pi) between, on the one hand, the pressure (P) in the transfer line (4) as measured (15) during the transfer step or at the end of the transfer step and, on the other hand, the pressure (Pi) in the transfer line after the purge step.

11. Method according to any one of Claims 7 to 10, **characterized in that** the percentage is comprised between 100% and 0% and preferably between 95% and 75%.

12. Method according to any one of Claims 6 to 11, **characterized in that** the filling pipe (4) comprises a purge flow meter (11) configured to measure the quantity of gas discharged during the purge step.

13. Method according to any one of Claims 1 to 12, **characterized in that** the filling station (1) comprises an electronic data processing and storage device (12), notably comprising a microprocessor and/or a computer, said electronic device (12) being configured to receive a signal indicative of the quantity of gas transferred as measured by the flow meter (5) during the transfer step and to calculate and/or receive and/or transmit and/or display the signal indicating the corrected quantity of gas transferred.

14. Method according to any one of Claims 1 to 13, **characterized in that** the signal indicating the corrected quantity of gas transferred is used in a step of calculating a charge to be made for the quantity of gas introduced into the tank (2).

15. Filling station for filling tanks with pressurized fluid, notably for filling pressurized hydrogen tanks, comprising a filling pipe (4) comprising an upstream end (3) connected to at least one source (5) of pressurized gas and at least one downstream end (8) intended to be connected to a tank (2) that is to be filled, the filling pipe (4) comprising a flow meter (9) and at least one downstream isolation valve (6) positioned between the flow meter and the downstream end (8) of the filling pipe, the at least one valve (6) being operated in such a way as to allow a step of transferring gas from the source (5) to the tank (2), the flow meter (5) being configured to measure the quantity of gas transferred and to generate in response a corresponding signal, the station (1) comprising an electronic data processing and storage device (12), notably comprising a microprocessor and/or a computer, the electronic device (12) being configured to receive the signal from the flow meter and to generate a signal indicative of the corrected quantity of gas transferred, this being obtained, during the transfer, by reducing or by increasing, by a determined corrective quantity, the quantity of gas transferred as measured by the flow meter (5) during the transfer, the flow meter being of the type that generates electric signals in the form of successive pulses each corresponding to an elementary measured quantity of gas, the generation of a signal indicating the corrected quantity of gas transferred being obtained by a step of modifying at least one of the following: the value of the elementary quantity of gas corresponding to a pulse generated by the flow meter (5) and/or the number of pulses generated by the flow meter (5) and/or the frequency with which the pulses generated by the flow meter (5) are emitted and/or the number of pulses counted from the pulses generated by the flow meter (5),

**characterized in that** the modification step is performed in a way that is temporally uniformly distributed through the transfer step so as to make it possible to display and/or to charge for a quantity of gas which is closer or equal to the quantity of gas actually transferred into the tank (2).

FIG.1

FIG.2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0074164 A1
- JP 2014043882 A
- JP 2006300156 A
- JP 2007024152 A